# EUROPEAN PATENT SPECIFICATION

(11) **EP 2 856 918 B1**
(45) Date of publication and mention of the grant of the patent: **08.05.2019**
(21) Application number: 12877943.6
(22) Date of filing: 28.05.2012
(51) Int. Cl.: A47J 37/04

(54) **An apparatus for grilling skewered food**
Gerät zum Grillen von aufgespießten Speisen
Appareil pour griller des brochettes

(43) Date of publication of application: 08.04.2015
(73) Proprietor: Hibiki Co. Ltd, Saitama 350-1102 (JP)
(72) Inventor: HIBIKI, Yoshiharu, Kawagoe-shi Saitama 350-1123 (JP)
(74) Representative: Weickmann & Weickmann PartmbB
(86) International application number: PCT/JP2012/064336
(87) International publication number: WO 2013/179495

(56) References cited:
- WO-A1-2008/126900
- JP-A- S5 052 265
- JP-A- H10 304 980
- JP-A- 2005 230 329
- JP-A- 2006 000 314
- JP-A- 2007 007 372
- JP-A- 2010 084 947
- JP-A- 2011 245 185
- JP-B2- S5 145 668
- JP-U- S 492 670
- JP-U- S 492 670
- JP-U- S51 114 483
- JP-Y- S4 023 584
- JP-Y2- S5 555 002
- US-A- 5 271 316

## Description

### Technical Field

The present invention relates to an apparatus for grilling skewered food which can quickly produce a large amount of skewered grilled food such as skewered grilled chickens, skewered grilled giblets and the like prepared by heating pieces of meat, fish, vegetables and the like on a skewer.

### Background Art

Methods of cooking skewered meat, fish, vegetables and the like have been long known, but producing grilled skewered food such as skewered grilled chickens, skewered grilled chickens, skewered grilled giblets and the like grilled giblets and the like which can be provided and sold in a bar, a restaurant or a store requires years of training under an experienced worker. Also, due to recent large bars, restaurants or stores, skewered grilled food have been required to be quickly produced in large amounts but in a short time.

As an apparatus for quickly producing grilled skewered food in large amounts and in a short time without any training, an apparatus for producing grilled skewered food is proposed in which many skewer holding tools are mounted onto an endless rotating chain at predetermined intervals, the tools receive in sequence raw materials of skewered food prepared by setting food materials on a skewer, which are then conveyed along heating devices for heating the rawmaterials to prepare skewered grilled food (refer to Patent Literature 1).

However, in the apparatus for grilling skewered food described in Patent Literature 1, the raw materials of skewered food must be held substantially horizontally when received by the tools, which is difficult for workers and is not hygienic for the raw materials of skewered food must be held at the tips positioned closer to a worker, thereby the food materials touching fingers.

Moreover, a process of heating the raw materials of skewered food with heating devices while conveyed along the devices on the endless rotating chain does not include dipping the raw materials of skewered food in sauce. This requires grilling raw materials of skewered food again after first grilling them and dipping them in sauce. As a result, producing grilled skewered food with the apparatus takes time and effort.

Further, because the skewer holding tools are mounted onto the endless rotating chain as they are connected with a connecting pin, the endless rotating chain must be removed from sprockets before dismounting and mounting the skewer holding tools every time the number of the tools is changed or fault skewer holding tools are replaced. Thus, dismounting and mounting the skewer holding tools is extremely troublesome and takes time.

To solve the problems, the present inventor has developed an apparatus for grilling skewered food in which workers can easily hold the skewer holding tools, food materials do not touch fingers, which is thus hygienic, producing grilled skewered food does not take time and effort, and dismounting and mounting the skewer holding tools is easily and takes little time (refer to Patent Literature 2).

However, in the apparatus for grilling skewered food described in Patent Literature 2, a heating device is fixed to a base via a supporting member, and the heat radiation surface is set at a predetermined height. Accordingly, food materials may be away upward or downward from a position facing the heat radiation surface depending on the mounting position of the food materials to the skewer, sometimes failing to heat the food materials uniformly.

In case of failure of a wire gauze of a protective net, which is provided to the heating device for protecting the heat radiation surface, the skewer holding tools, the endless rotating chain, a cover, and then the heating device have to be removed before replacing the protective net. Thus replacing the protective net is extremely troublesome and takes time.

Deposition and accumulation of sauce on a connecting part between the skewer holding tool and the supporting member, which support the skewer holding tool such that the tool is vertically rotatable, prevent smooth rotation of the skewer holding tool and smooth downward movement of the tool along a skewer holding tool lifting member in the vicinity of a sauce reservoir, not allowing the raw materials of skewered food to be dipped into the sauce, or causing the skewer holding tools to become tangled to interfere with the operation.

In case of failure of the endless rotating chain to move during operation of the apparatus for grilling skewered food with some causes, the endless rotating chain and the drive sprocket is overloaded to be damaged and scattered, which is dangerous to workers and also sometimes damages a drive motor by heat.

Also, mounting and replacing the skewer holding tools and cleaning and repairing a drive unit takes a long time. This is because they require removing the endless rotating chain, the drive sprocket, the driven sprocket, and also a supporting shaft and removing these parts is troublesome.

To solve the problems, the present inventor improved the apparatus to develop an apparatus for grilling skewered food in which food materials can be uniformly heated, a protective net can be easily replaced, the skewer holding tools do not become tangled to interfere with operation, and components of a drive unit can be easily removed, thereby taking little time for mounting and replacing the skewer holding tools and cleaning and repairing a drive unit (refer to Patent Literature 3). The nearest state of the art regarding the present invention is disclosed in JP 2007-007372 A which already shows an apparatus for grilling skewered food comprising:
a skewer holding tool conveyance mechanism conveying raw materials of skewered food having food materials threaded onto a skewer while the raw materials of skewered food are held in a vertical position by a skewer holding tool mounted onto an endless rotating chain;
a heating device heating the raw materials of skewered food from both sides as the raw materials of skewered food are conveyed;
a sauce reservoir storing a sauce in which the raw materials of skewered food are dipped; and
a control device controlling activation, deactivation, and conveyance speed of the skewer holding tool conveyance mechanism.

The rather complicated mechanism according to this state of the art has the problem that skewers become stuck in the device. Accordingly, it is an object of the present invention to reduce the risk of the skewers becoming stuck in the apparatus.

This object is solved with the features of present claim 1. The sublcaims contain advantageous further developments of the present invention.

### Citation List

### Patent Literatures

Patent Literature 1: JP 2004-057463 A
Patent Literature 2: JP 2009-005880 A
Patent Literature 3: JP 2011-245185 A

### Summary of Invention

### Technical Problem

However, even with the apparatus for grilling skewered food described in Patent Literature 2, the skewer holding tool lifting member is formed symmetrically which dips raw materials of skewered food into the sauce stored in the sauce reservoir by guiding the skewer holding tool to move upward and downward. Accordingly, the skewer holding tool rotates downward at substantially the center of the sauce reservoir to dip the raw materials of skewered food into the sauce, and thus the raw materials is dipped in the sauce for only a short time and insufficiently basted with the sauce.

Gas burners, each connected to a manifold through piping, have different calorific values at the heat radiation surface due to individual properties. Accordingly, the raw materials is heated insufficiently or unevenly in some cases.

The sauce dripping from the raw materials of skewered food, or gravy oozing by heating deposit and accumulate on the apparatus for grilling skewered food after operation of the apparatus for a long time, thereby inhibiting operation. Thus the apparatus needs to be cleaned regularly, but cleaning is not easy.

The skewer holding tool, which is placed on the upper end surface of a skewer holding tool guiding member for conveyance, wears at a portion in contact with the guiding member after operation of the apparatus for a long time. Also, the skewer holding tool, and the skewer holding tool guiding member and a pressing roller, all of which contact with each other, generate intense noise because they are all made of metal.

The present invention has been made in view of the above problems with the conventional apparatuses, and aims to provide an apparatus for grilling skewered food in which raw materials of skewered food are dipped in sauce for a sufficiently long time and sufficiently basted with the sauce.

The present invention also aims to provide an apparatus for grilling skewered food in which the raw materials of skewered food are sufficiently heated while minimizing uneven heating.

The present invention also aims to provide an apparatus for grilling skewered food in which regular cleaning of the apparatus is easier.

The present invention also aims to provide an apparatus for grilling skewered food in which the contacting portion of the skewer holding tool is little worn even after a long-term operation, and little noise is generated even by the contact between the skewer holding tool, and the skewer holding tool guiding member and the pressing roller.

### Solution to Problem

In order to achieve the object, an apparatus for grilling skewered food of the present invention includes a skewer holding tool conveyance mechanism conveying raw materials of skewered food having food materials threaded onto a skewer in a vertical position by a skewer holding tool mounted onto an endless rotating chain, heating devices heating the raw materials of skewered food from both sides as the raw materials is conveyed, a sauce reservoir storing sauce in which the raw materials of skewered food is dipped, and a control device controlling activation, deactivation, and conveyance speed of the skewer holding tool conveyance mechanism. In the apparatus, a skewer holding tool lifting member is shaped such that the member rotates the skewer holding tool downward at a portion before the center of the sauce reservoir, the member guiding the skewer holding tool and moving the skewer holding tool upward and downward to dip the raw materials of skewered food in the sauce stored in the sauce reservoir, the member is divided into a front skewer holding tool lifting member and a rear skewer holding tool member being adjustable in position.

Preferably, a temperature sensor is firmly attached to a heat radiation surface of each gas burner, and a temperature monitor indicating a temperature from an output of corresponding temperature sensor is provided on the front surface of a base.

Preferably, a covering member covering a screwed-together portion of each gas burner and piping is provided, and a window hole is formed on a side face of a movable clamping body of the skewer holding tool.

Preferably, the top end of a skewer holding tool guiding member is covered with a synthetic resin covering member, and a pressing roller is formed of a synthetic resin material.

### Advantageous Effects of Invention

According to an apparatus for grilling skewered food of the present invention, a skewer holding tool lifting member is shaped such that the member rotates a skewer holding tool downward at a portion before the center of a sauce reservoir. Therefore, the raw materials of skewered food is dipped in sauce for a sufficiently long time and sufficiently basted with the sauce.

A temperature sensor is firmly attached to a heat radiation surface and a temperature monitor indicating a temperature is provided. Therefore, learning temperatures of each heat radiation surface and then controlling heat adjusting cocks enable sufficient heating of the raw materials of skewered food while minimizing uneven heating.

A screwed-together portion between a gas burner and piping is covered with a covering member. Therefore, the sauce and the like will not deposit on the screwed-together portion, and the gas burner is easily removed and cleaned. Also, a window hole is formed on the side face of a movable clamping body of the skewer holding tool. Therefore, the inside of the movable clamping body is sufficiently cleaned by pouring a cleaning liquid through the hole.

Moreover, the top end of a skewer holding tool guiding member is covered with a covering member of synthetic resin, and also a pressing roller is formed of a synthetic resin material. Therefore the skewer holding tool is little worn or makes little noise even after a long-term operation.

### Brief Description of Drawings

Fig. 1 is a plan view of an apparatus for grilling skewered food according to the present invention.
Fig. 2 is a left side view of the apparatus for grilling skewered food according to the present invention.
Fig. 3 is a front view of the apparatus for grilling skewered food according to the present invention.
Fig. 4 is a back view of the apparatus for grilling skewered food according to the present invention.
Fig. 5(A) is a plan view of a drive unit, and Fig. 5(B) is a cross-sectional view thereof.
Fig. 6(A) is a plan view of a drive sprocket attachment part, and Fig. 6(B) is a cross-sectional view thereof.
Fig. 7 (A) is a plan view of a driven sprocket attachment part, and Fig. 7(B) is a cross-sectional view thereof.
Fig. 8 (A) is a front view of a heating device installing part, and Fig. 8(B) is a side view thereof.
Fig. 9 (A) is a plan view of a skewer holding tool supported by a supporting member, and Fig. 9(B) is a side view thereof.
Fig. 10(A) is a plan view of a skewer holding tool main body, and Fig. 10(B) is a side view thereof.
Figs. 11(A) to 11(C) are explanatory views showing how to mount the skewer holding tool onto the supporting member.
Fig. 12(A) is a plan view showing an action of a skewer releasing mechanism, and Fig. 12(B) is a side view thereof.
Fig. 12B is a side view of a contacting portion between the skewer holding tool and a skewer holding tool guiding member.
Fig. 13 (A) is a plan view of a sauce prevention mechanism 50, and Fig. 13(B) is a side view thereof.
Fig. 14(A) is a plan view showing an operation of the skewer holding tool in the vicinity of a sauce reservoir when a skewer holding tool holder is positioned downward, and Fig. 14(B) is a side cross-sectional view thereof.
Fig. 15(A) is a plan view showing an operation of the skewer holding tool in the vicinity of the sauce reservoir when the skewer holding tool holder is positioned upward, and Fig. 15(B) is a side cross-sectional view thereof.
Fig. 16(A) is a plan view of a skewer holding tool lifting member which is separated to adjust its position, and Fig. 16(B) is a front view thereof.

### Description of Embodiments

Hereinafter, preferable embodiments of an apparatus for grilling skewered food of the present invention will be specifically described with reference to the drawings.

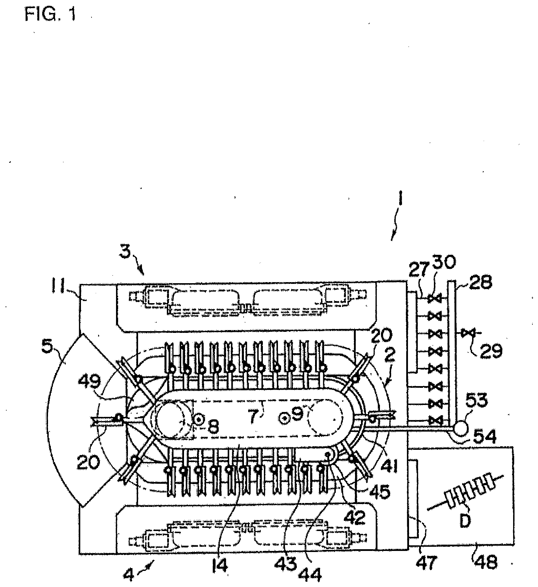

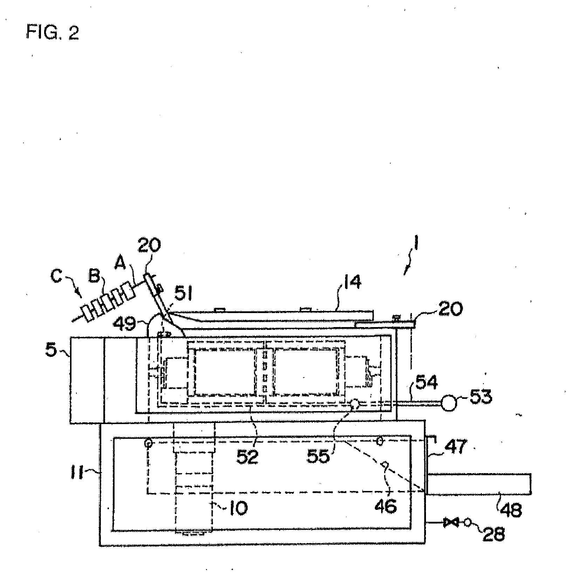

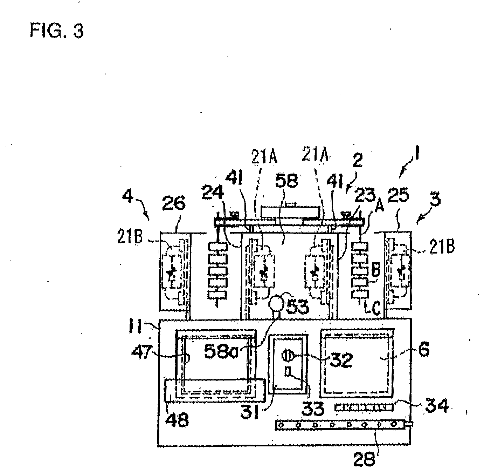

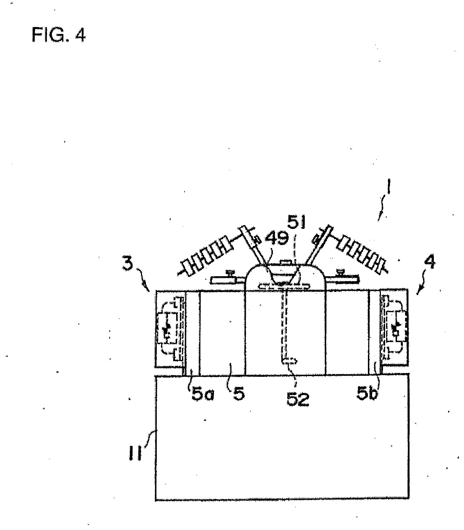

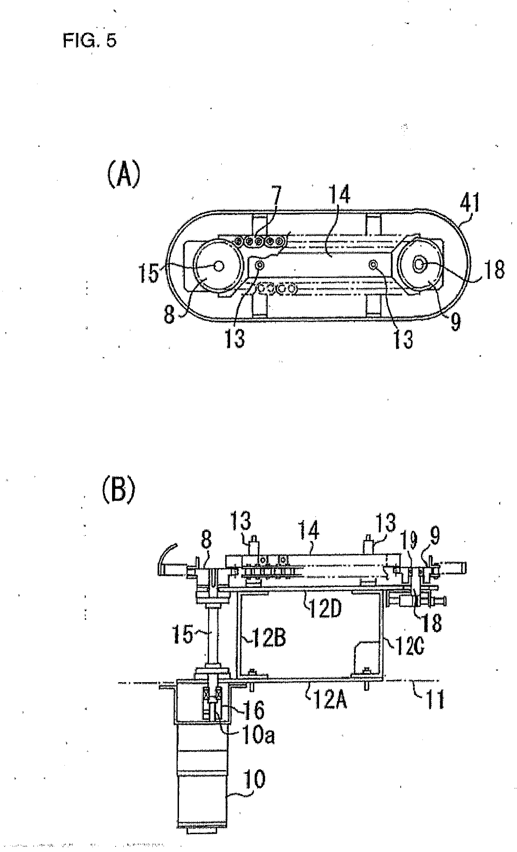

Fig. 1 is a plan view of an apparatus for grilling skewered food according to the present invention, Fig. 2 is a left side view thereof, Fig. 3 is a front view thereof, and Fig. 4 is a back view thereof. Fig. 5(A) is a plan view of a drive unit, and Fig. 5(B) is a cross-sectional view thereof.

As shown in Figs. 1 to 5(B), the apparatus for grilling skewered food 1 of the present invention includes a skewer holding tool conveyance mechanism 2, heating devices 3 and 4, a sauce reservoir 5, and a control device 6.

The skewer holding tool conveyance mechanism 2 includes an endless rotating chain 7, a drive sprocket 8, a driven sprocket 9, and a drive motor 10.

As shown in Figs. 5(A) and 5(B), a bottom plate 12A is placed on the top surface of a base 11, and a support plate 12D is placed on the bottom plate 12A via brackets 12B and 12C. Supports 13 and 13 are erected on the support plate 12D with a predetermined interval in the longitudinal direction. A ceiling plate 14 is provided at top end of the supports 13 and 13.

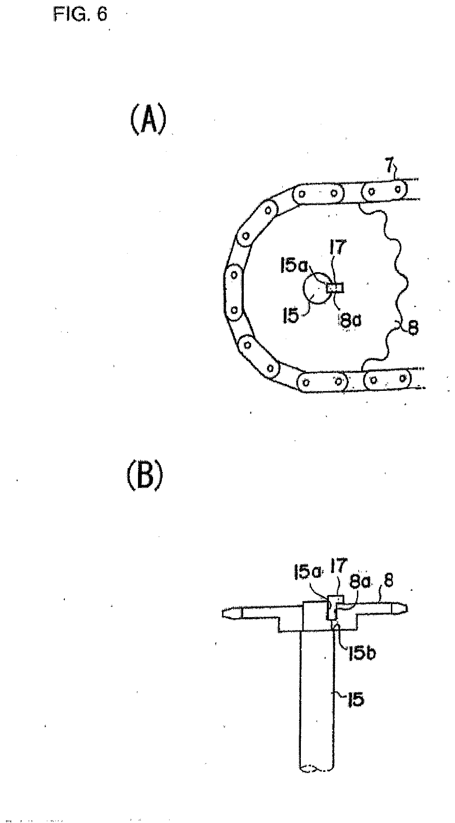

A drive shaft 15 is erected on the back side of the base 11, and as shown in Figs. 5(A), 5(B), 6(A) and 6(B), the drive sprocket 8 is fixed on the top end of the drive shaft 15. Also, a shaft 10a of the drive motor 10 is connected to a bottom end of the drive shaft 15 via a connecting member 16.

Here, as shown in Figs. 6(A) and 6(B), the drive shaft 15 is pierced to have a keyway 15a, and the drive sprocket 8 is pierced to have a keyway 8a. A key 17 is inserted into or removed from the keyways 15a and 8a with fingers to easily mount or dismount the drive sprocket 8 from the drive shaft 15.

The drive shaft 15 has a step 15b for preventing the drive sprocket 8 from moving downward.

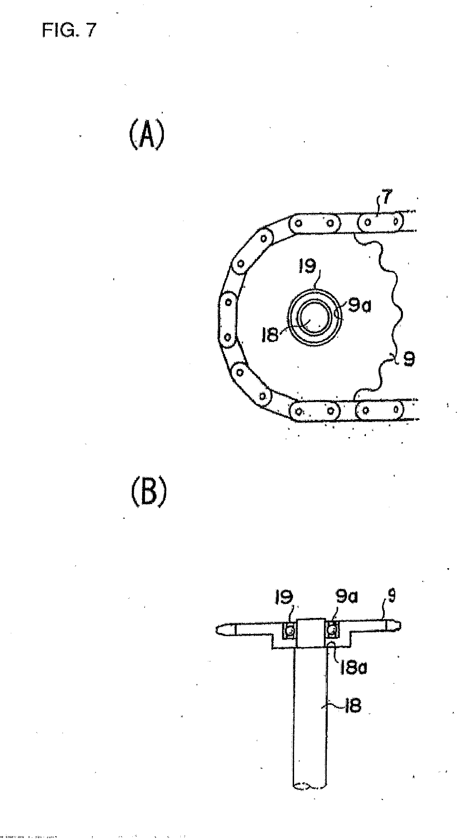

A driven shaft 18 is erected on the front side of the base 11, and as shown in Figs. 5(A), 5(B), 7(A) and 7(B), the driven sprocket 9 is fixed on the top end of the driven shaft 18 via a bearing 19.

Here, as shown in Figs. 7(A) and 7(B), the bearing 19 is forcibly inserted into a fitting hole 9a of the driven sprocket 9, whereas the bearing 19 is freely fit to the driven shaft 18. Accordingly, the driven sprocket 9 is removed from the driven shaft 18 relatively easily by being strongly pulled upward.

The driven shaft 18 has a step 18a for preventing the driven sprocket 9 from moving downward.

The endless rotating chain 7 surrounds and fits the drive sprocket 8 and the driven sprocket 9. A plurality of skewer holding tools 20, 20... is mounted on the endless rotating chain 7 with a predetermined interval.

Either of the drive sprocket 8 and the driven sprocket 9 may be provided on the front or back side of the base 11.

The key 17 is a low strength metal material such as aluminum formed into an L-shape. The key 17 will be broken when the drive shaft 15 and the drive sprocket 8 are overloaded therebetween.

Accordingly, if the endless rotating chain 7 fails to move with some causes, an overload occurs between the drive shaft 15 and the drive sprocket 8, the key 17 is broken, and after that the drive shaft 15 idles . This prevents the endless rotating chain 7, the drive sprocket 8, and the drive motor 10 from being broken.

As shown in Figs. 5(A) and 5(B), in the skewer holding tool conveyance mechanism 2, the endless rotating chain 7, the drive sprocket 8, the driven sprocket 9, and the drive motor 10 are combined.

Accordingly, the components of the skewer holding tool conveyance mechanism 2 can be easily removed collectively, and thus mounting and replacing of the skewer holding tools 20 and cleaning and repairing of the components take little time.

The drive motor 10 can be separated alone by releasing the connection between the drive shaft 15 and a shaft 10a of the drive motor 10 at the connecting member 16, for the convenience of replacing, cleaning, and repairing.

The heating devices 3 and 4 are provided right and left sides of the skewer holding tool conveyance mechanism 2, and include gas burners 21A and 21B oppositely placed with a predetermined interval.

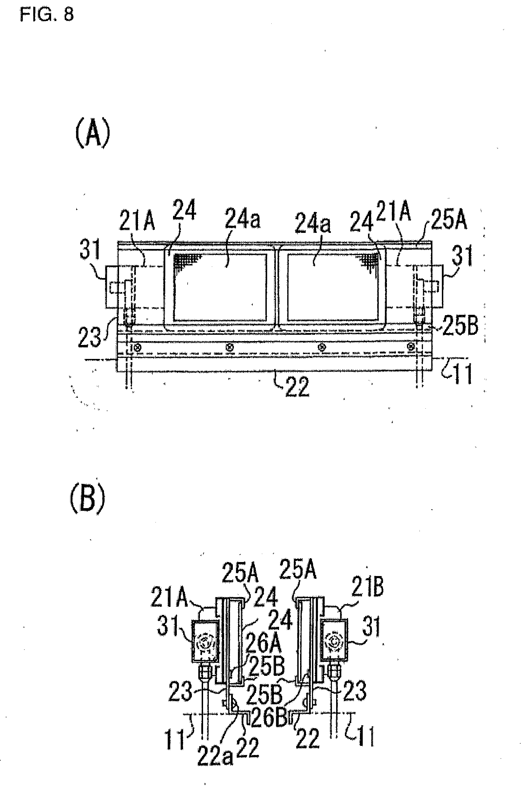

As shown in Figs. 8(A) and 8(B), installation plates 23 are erected on the top surface of the base 11 via support bodies 22, and the gas burners 21A and 21B are fixed and installed on the installation plates 23.

Here, the support bodies 22 have an insertion slot 22a in a height direction, and the installation plate 23 have a screw hole 23a. Thus, adjusting the height of the installation plate 23 and fastening the support body 22 and the installation plate 23 with a screw enables adjusting of the position of the heat radiation surface of the gas burners 21A and 21B to an appropriate height.

This enables to position the food materials to face the heat radiation surface regardless of the mounting position of the food materials of the raw materials of skewered food to the skewer, thereby uniformly heating the food materials.

As shown in Figs. 8(A) and 8(B), a protective net 24 is attached to the heat radiation surface of the gas burners 21A and 21B for protecting the heat radiation surface.

The protective net 24 is fixed to the heat radiation surface by for example a screw with an upper and a lower ends abutting on guides 25A and 25B firmly attached to the installation plate 23. When removed from the installation plate 23, the protective net 24 is moved smoothly along the guides 25A and 25B and can be removed from the front side of the base 11.

Thus, in case of failure of a wire gauze 24a of the protective net 24, the protective net 24 is removed from the installation plate 23, and then moved smoothly along the guides 25A and 25B to be removed from the front side of the base 11, and thus replacement of the protective net 24 is easy and takes little time.

As shown in Figs. 8 (A) and 8 (B), temperature sensors 26A and 26B are attached firmly on corners of the heat radiation surfaces of the gas burners 21A and 21B.

Thus, temperatures of the heat radiation surfaces of the gas burners 21A and 21B are determined from outputs of the temperature sensors 26A and 26B.

The gas burner 21A is covered, by a cover 26A covering the skewer holding tool conveyance mechanism 2, such that the heat radiation surface is positioned outside, and the gas burner 21B is covered, by a cover 26B covering itself, such that the heat radiation surface is positioned inside.

In the present embodiment, far-infrared gas burners are used as the gas burners 21A and 21B, however, not only gas burners, but also electric heaters may be used.

Gas introduction ports of the gas burners 21A and 21B are connected to a manifold 28 positioned ahead of the front surface of the base 11 through piping 27, 27.... The manifold 28 is provided with a gas introducing cock 29 and heat adjusting cocks 30, 30....

The gas introduction ports of the gas burners 21A and 21B and piping 27, 27... are screwed together with a bolt and a nut, and covering members 31, 31... of synthetic resin are provided to cover the screwed-together portion.

This prevents sauce or gravy from depositing and accumulating on the screwed-together portion. When the covering members 31, 31... are removed, the bolt can be easily unscrewed from the nut, and the gas burners 21A and 21B can be easily cleaned or replaced.

The sauce reservoir 5 is positioned on the base 11 and at the back end part thereof, and is freely mounted onto the base 11.

The control device 6 is positioned inside the base 11, and controls the drive motor 10 to activate, deactivate, and control the conveyance speed of the skewer holding tool conveyance mechanism 2.

An operation panel 31 is provided on the front surface of the base 11, and an operation dial 32 and an operation lamp 33 are positioned on the operation panel 31.

Temperature monitors 34, 34... for indicating a temperature of each heat radiation surface detected by the temperature sensors 26A and 2B are provided at a lower right portion of the front surface of the base 11.

Thus, temperatures of the heat radiation surfaces can be recognized by the temperature monitors 34, 34... and the temperatures of the heat radiation surfaces can be maintained substantially identical by appropriately opening and closing the heat adjusting cocks 30, 30..., thereby heating the raw materials of skewered food C sufficiently and evenly.

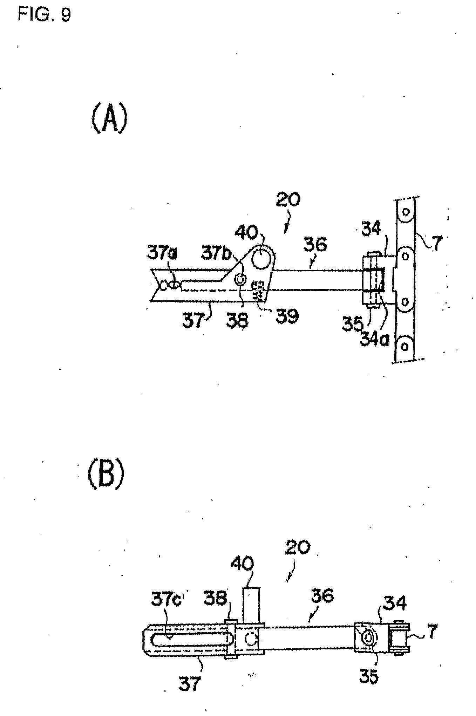

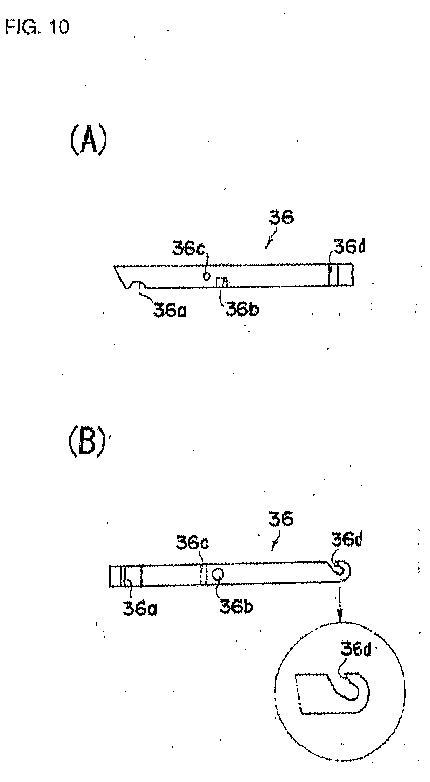

As shown in Figs. 9(A), 9(B), 10 (A) and 10(B), a plurality of supporting members 34, 34... are fixed on the endless rotating chain 7 with a predetermined interval, and the skewer holding tools 20 are supported by the supporting members 34 via support pins 35 such that the tools are vertically rotatable.

As shown in Figs. 9(A), 9(B), 10(A) and 10(B), the skewer holding tool 20 includes a holding tool main body 36 and a movable clamping body 37, which is connected to the holding tool main body 36 with a pivot pin 38 such that the movable clamping body 37 is horizontally rotatable. The movable clamping body 37 is normally resiliently biased by a spring 39 to clamp and hold a skewer A.

As shown in Figs. 9(A), 9(B), 10(A) and 10(B), the holding tool main body 36 is a rectangular metal rod with a semicircular skewer clamping groove 36a on a side face of the tip end section, and a spring mounting recess 36b pierced in a side face of the middle section. The holding tool main body 36 also has a pin insertion hole 36c pierced at the middle section and a pin insertion groove 36d pierced with a predetermined inclination angle from an upper end surface into a central portion of a proximal section.

Here, the support pin 35 inserted into the pin insertion groove 36d is not easily removed therefrom because an installation portion inner surface 34a of the supporting member 34 restrict the horizontal movement of the back end surface of the holding tool main body 36. In order to make it more difficult for the support pin 35 to be removed, the pin insertion groove 36d is preferably bent as shown in Fig. 10(B).

As shown in Figs. 9(A) and 9(B), the movable clamping body 37 is a metal plate bent into a U-shape to form the upper, the side, and the lower faces. The upper and the lower faces each have a semicircular skewer clamping groove 37a on a side face of the tip end section, and a pin insertion hole 37b pierced at the middle section. Also, a releasing pin 40 is firmly attached to and erected on a proximal section of the upper face.

The side face has a long window hole 37c. In cleaning of the movable clamping body 37, the sauce and gravy deposited and accumulated inside can be cleaned and washed off relatively easily by pouring a cleaning liquid through the window hole 37c.

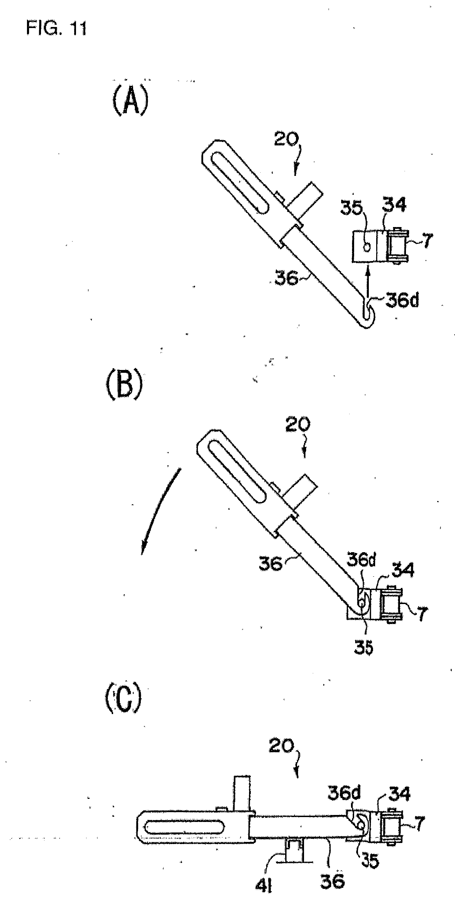

With such a configuration, by moving the skewer holding tool 20 upward while the skewer holding tool 20 is inclined a predetermined angle with a tip end up as shown in Fig. 11(A), the support pin 35 of the supporting member 34 is guided and inserted into the pin insertion groove 36d of the holding tool main body 36 as shown in Fig. 11(B). Then, by rotating the skewer holding tool 20 downward, the supporting member 34 can support the skewer holding tool 20 substantially horizontally as shown in Fig. 11(C).

Thus, the skewer holding tool 20 can be mounted onto the supporting member 34 without detaching and attaching the support pin 35.

In skewer holding tool conveyance mechanism 2, as shown in Fig. 1, a rail-like skewer holding tool guiding member 41 is provided along the endless rotating chain 7 outwardly thereof. The holding tool main body 36 is placed on the upper end surface of the skewer holding tool guiding member 41, and normally the skewer holding tool 20 is conveyed in a substantially horizontal position.

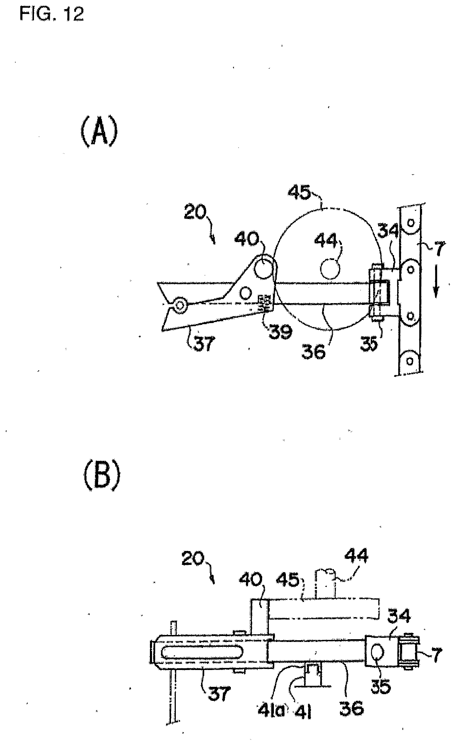

Here, as shown in Fig. 12(B), the top end of the skewer holding tool guiding member 41 is covered with a covering member 41a of synthetic resin.

This prevents wearing of the skewer holding tool 20 over a long period of time, and also reduces the noise caused by contact between metal parts.

A skewer releasing mechanism 42 is provided on the left front side of the skewer holding tool conveyance mechanism 2, and includes a support plate 43 fixed to the ceiling plate 14 and a pressing roller 45 rotatably supported by the support plate 43 via a spindle 44, as shown in Fig. 1.

As shown in Figs. 12(A) and 12(B), when a skewer holding tool 20 with a heated product of skewered grilled food D moves toward the pressing roller 45, and the pressing roller 45 is pressed against a releasing pin 40 firmly attached to the movable clamping body 37, the movable clamping body 37 is rotated against the elastic force of the spring 39 to release clamping of a skewer by the holding tool main body 36 and the movable clamping body 37, releasing and dropping the product of skewered grilled food D.

Here, because the pressing roller 45 is formed of synthetic resin, the noise caused by contact between metal parts is reduced.

The product of skewered grilled food D dropped from the skewer holding tool 20 slides down along a chute 46 formed on the left front side of the base 11, is discharged from a product outlet 47 formed on the front surface of the base 11, and is inserted into a receiving tray 48.

A skewer holding tool lifting member 49 with an upper end surface curved and varying in height as shown in Figs. 1 and 4 is provided in the vicinity of the sauce reservoir 5 on the back end of the skewer holding tool conveyance mechanism 2. A starting and terminal ends of the skewer holding tool lifting member 49 are connected to the skewer holding tool guiding member 41. The upper end surface is highest at portions where the skewer holding tool 20 reaches the side faces 5a and 5b of the sauce reservoir 5, and is lowest at a portion before the center of the sauce reservoir 5.

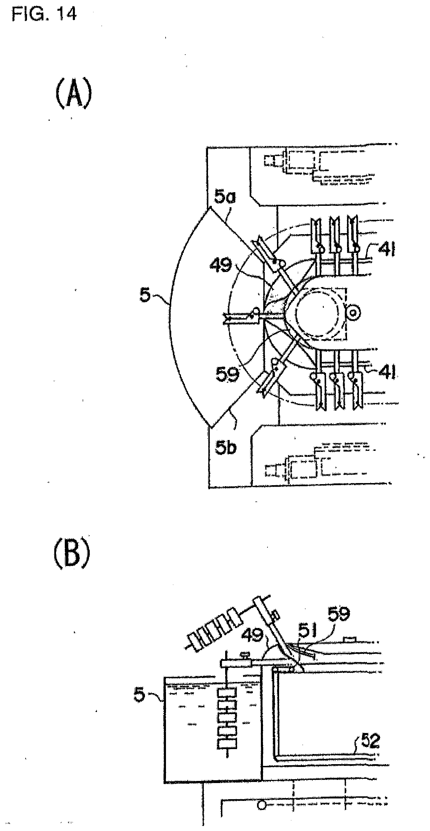

Accordingly, as shown in Figs. 14(A) and 14(B), the skewer holding tool 20 placed on the skewer holding tool guiding member 41 and conveyed in a horizontal position is transferred to the skewer holding tool lifting member 49. Then the skewer holding tool 20 placed on the skewer holding tool lifting member 49 rotates upward, is inclined most at the portion where the skewer holding tool 20 reaches the side face 5a of the sauce reservoir 5, returns to the substantially horizontal position at the portion before the center of the sauce reservoir 5, and is inclined most again at the portion where the skewer holding tool 20 reaches the side face 5b of the sauce reservoir 5.

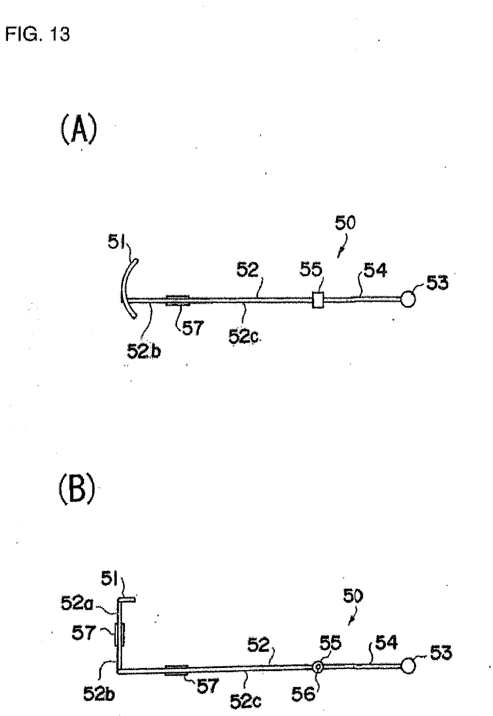

The apparatus for grilling skewered food 1 is provided with a sauce prevention mechanism 50 as shown in Figs. 13(A) and 13(B). The sauce prevention mechanism 50 includes an arc-shaped skewer holding tool holder 51, a bent rod-shaped holder supporting rod 52, gripping member 53, a straight rod-shaped gripping member supporting rod 54, and a connecting member 55 connecting the holder supporting rod 52 to the gripping member supporting rod 54. The connecting member 55 is vertically rotatable by a spindle 56.

The holder supporting rod 52 is appropriately divided into a vertical rod portion 52a, a bent rodportion 52b, andahorizontal rod portion 52c, at each of which a male threaded portion is formed. The male threaded portions are screwed into female threaded portions formed in length adjusting members 57 and 57 to adjust the vertical and horizontal lengths.

As shown in Figs. 2 and 3, the skewer holding tool holder 51 is normally positioned below the upper end surface of the skewer holding tool lifting member 49, and the holder supporting rod 52 is placed at a lower part inside covers 23 and 24 of the skewer holding tool conveyance mechanism 2, from the back side to the front side of the base 11.

The gripping member supporting rod 54 protrudes from a supporting rod guiding hole 58a pierced in a cover 58 covering the front part of the skewer holding tool conveyance mechanism 2.

As shown in Fig. 3, therefore in a normal operation where the gripping member 53 and the gripping member supporting rod 54 are positioned upward within the supporting rod guiding hole 58a, the skewer holding tool holder 51 is positioned below the upper end surface of the skewer holding tool lifting member 49 as shown in Figs. 14(A) and 14(B), so that the skewer holding tool 20 is placed on the skewer holding tool lifting member 49 to be lifted up and down, as described above.

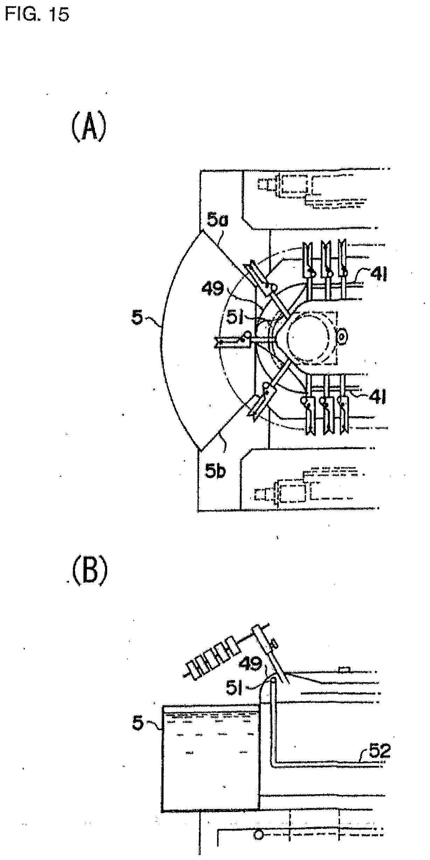

On the other hand, when a worker grips and presses down the gripping member 53 to position the gripping member 53 and the gripping member supporting rod 54 downward within the supporting rod guiding hole 58a, the holder supporting rod 52 rotates upward, and the skewer holding tool holder 51 is positioned at substantially the same height as the upper end surface of the skewer holding tool lifting member 49 as shown in Figs. 15(A) and 15(B).

The skewer holding tool 20 is therefore placed on the skewer holding tool lifting member 49 to rotate upward, inclined most, then kept at the highest position while being placed on the skewer holding tool holder 51, placed on the skewer holding tool lifting member 49 to rotate downward, and then placed on the skewer holding tool guiding member 41 to return to the horizontal position.

Thus, in a normal operation where the gripping member 53 and the gripping member supporting rod 54 are positioned upward within the supporting rod guiding hole 58a, the skewer holding tool 20 is lifted up and down, allowing the raw materials of skewered food C to be dipped into the sauce in the sauce reservoir 5. On the other hand, when the gripping member 53 is pressed down to position the gripping member 53 and the gripping member supporting rod 54 downward within the supporting rod guiding hole 58a, the skewer holding tool 20 is kept upward, keeping the raw materials of skewered food C away from the sauce.

However, deposition and accumulation of the sauce on the connecting part between the skewer holding tool 20 and the supporting member 34 prevent smooth rotation of the skewer holding tools 20 and its smooth downward movement along a skewer holding tool lifting member 49. This prevents the raw materials of skewered food C from being dipped into the sauce or causes the skewer holding tools 20 and 20 to become tangled, thereby possibly interfering with the operation.

Thus, as shown in Figs. 14(A) and 14(B), provided is a skewer holding tool regulating member 59, which contacts the skewer holding tool 20 from above so that the skewer holding tool 20 is smoothly guided onto the skewer holding tool lifting member 49 and moves downward, thereby lowering the skewer holding tool 20.

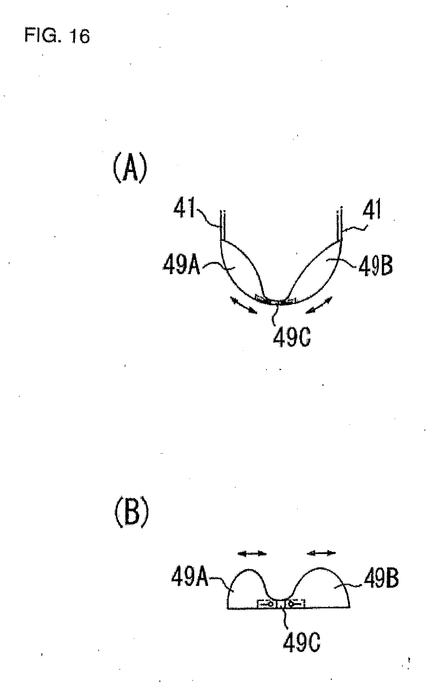

As shown in Figs. 16 (A) and 16 (B), the skewer holding tool lifting member 49 is divided into a front skewer holding tool lifting member 49A and a rear skewer holding tool lifting member 49B at a portion where the upper end surface is lowest, where the members 49A and 49B may be connected via a connecting member 49C.

According to this, the positions of the front and the rear skewer holding tool lifting members 49A and 49B are finely adjusted in the directions of the arrows, thereby smoothly guiding the skewer holding tool 20 onto the upper end surface of the skewer holding tool lifting member 49 and preventing a skewer A from being stuck.

The apparatus for grilling skewered food 1 of the present invention has the above configuration, and is used as follows to produce grilled skewered food.

A worker is positioned in front of the base 11, and turns the operation dial 32 to the right to turn on the apparatus for grilling skewered food 1. This lights up the operation lamp 33, starts actuating the apparatus for grilling skewered food 1, drives the drive motor 10, and moves the endless rotating chain 7.

In front of the base 11, the worker press a base end of the skewer A of the raw materials of skewered food C with the food materials B threaded onto the skewer A into the skewer clamping grooves 36a and 37a respectively of the holding tool main body 36 and the movable clamping body 37 of the skewer holding tool 20, thereby clamping the base end between the holding tool main body 36 and the movable clamping body 37 clamp. Thus, the skewer holding tool 20 hangs and holds the raw materials of skewered food C.

As shown in Figs. 1 and 3, the raw materials of skewered food C held by the skewer holding tool 20 reaches, as it is hung up, the portion provided with a heating device 3. Then the raw materials of skewered food C is heated by the gas burners 21A and 21B while conveyed on the endless rotating chain 7.

As shown in the Figs. 1, 14(A), and 14(B), when coming close to the sauce reservoir 5, the raw materials of skewered food C rotates upward to be inclined as the skewer holding tool 20 is guided onto the skewer holding tool lifting member 49 and rotates upward, and the raw materials of skewered food C becomes inclined most when reaching the side face 5a of the sauce reservoir 5 to pass over the side face 5a.

Then, as the skewer holding tool 20 rotates downward, the raw materials of skewered food C also rotates downward to be dipped into the sauce in the sauce reservoir 5.

Then, as the skewer holding tool 20 is guided onto the skewer holding tool lifting member 49 and rotates upward again, the raw materials of skewered food C also rotates upward to be inclined, and becomes inclined most when reaching the side face 5b of the sauce reservoir 5 to pass over the side face 5b.

As shown in Figs. 1 and 3, the raw materials of skewered food C basted with the sauce reaches, as it is hung up, the portion provided with the heating device 4 again. Then the raw materials of skewered food C is heated by the gas burners 21A and 21B while conveyed on the endless rotating chain 7.

The completely heat processed product of grilled skewered food D reaches the portion provided with the skewer releasing mechanism 42. When the pressing roller 45 is pressed against the releasing pin 40 firmly attached to the movable clamping body 37 of the skewer holding tool 20, the movable clamping body 37 is rotated to release clamping of the skewer A, which then drops from the skewer holding tool 20.

The dropped product of grilled skewered food D slides down along the chute 46 to be discharged through the product outlet 47 and inserted into the receiving tray 48. Thus, products of grilled skewered food D can be produced substantially automatically except for mounting the raw materials of skewered food C onto the skewer holding tool 20.

In order to produce grilled skewered food which are not to be basted, such as salt-grilled skewered food, a worker only has to press down the gripping member 53 to position the gripping member 53 and the gripping member supporting rod 54 downward within the supporting rod guiding hole 58a.

Then, the skewer holding tool holder 51 moves upward to be positioned at the substantially same height as the upper end surface of the skewer holding tool lifting member 49 as shown in Figs. 15 (A) and 15(B), so that, in the vicinity of the sauce reservoir 5, the skewer holding tool 20 is placed on and guided by the skewer holding tool lifting member 49 and the skewer holding tool holder 51, and kept at the most inclined state, keeping the raw materials of skewered food C away from the sauce.

As described above, according to the apparatus for grilled skewered food 1 of the present invention, a worker is only required to pinch the base end of the skewer A with fingers while the raw materials of skewered food C is hung down, press the base end into the tip ends of the holding tool main body 36 and the movable clamping body 37 as the skewer holding tool 20 moves through the front part of the base 11. Therefore, the raw materials of skewered food C is easily mounted onto the skewer holding tool 20, and the food materials B do not touch fingers, which is thus hygienic.

In the course of heating the raw materials of skewered food C while being conveyed along the heating devices 3 and 4 by the endless rotating chain 7, the raw materials of skewered food C is basted. Therefore, producing the product of grilled skewered food D does not take time and effort.

The pin insertion groove 36d with a predetermined inclination angle is pierced in the holding tool main body 36, allowing the skewer holding tool 20 to be mounted to the supporting member 34, thus onto the endless rotating chain 7 only by moving the skewer holding tool 20 upward as it is inclined, and then rotating the skewer holding tool 20 downward.

The endless rotating chain 7 therefore does not have to be removed from the sprockets 8 and 9 every time the number of the skewer holding tools 20 is changed or fault skewer holding tools 20 are replaced. Thus, the skewer holding tool 20 is mounted and dismounted extremely easily and quickly.

Any tools are needed for attaching and detaching the drive sprocket 8 to the drive shaft 15, and the driven sprocket 9 to the driven shaft 18, making it easier to remove the endless rotating chain 7, and to mount and dismount, and replace a large number of skewer holding tools 20 at the same time.

The heights of the heat radiation surface of the gas burners 21A and 21B are appropriately adjusted by appropriately adjusting the height of the installation plate 23 and fastening the support body 22 to the installation plate 23 with a screw. Thus, the food materials are uniformly heated regardless of the mounting position of the food materials of the raw materials of skewered food to the skewer.

The upper and the lower ends of the protective net 24 are in contact with the guides 25A and 25B, and the protective net 24 is moved smoothly along the guides 25A and 25B to be removed from the front side of the base 11. Therefore replacing of the protective net 24 is easy, and takes little time.

The skewer holding tool regulating member 59 is provided which contacts the skewer holding tool 20 from above to lower the skewer holding tool 20. This prevents the skewer holding tool 20 not smoothly moving downward along the skewer holding tool lifting member 49, the raw materials of skewered food C not being dipped into the sauce, and the skewer holding tools 20 become tangled to interfere with the operation.

If the endless rotating chain 7 stops moving with some causes, the key 17 is broken due to an overload and the drive shaft 15 idles. This prevents the endless rotating chain 7, the drive sprocket 8, and the drive motor 10 from being broken.

In the skewer holding tool conveyance mechanism 2, the endless rotating chain 7, the drive sprocket 8, and the driven sprocket 9 are combined. Thus, they can be easily removed collectively, taking little time for mounting and replacing of the skewer holding tools 20, and cleaning and repairing of the components.

According to the apparatus for grilling skewered food 1 of the present invention, the skewer holding tool lifting member 49 is formed such that the skewer holding tool 20 rotates downward before reaching the central portion of the sauce reservoir, therefore the raw materials of skewered food C is dipped in the sauce for a sufficiently long time and is sufficiently basted with the sauce.

Temperature sensors 26A and 26B are firmly attached to the heat radiation surfaces, and temperature monitors 34, 34... indicating temperatures are provided. Therefore, the raw materials of skewered food C is sufficiently heated and uneven heating is minimized by learning the temperatures of the heat radiation surfaces and then controlling the heat adjusting cocks 30, 30....

The screwed-together portions between the gas burners 21A and 21B and the piping 27, 27... are covered with covering members 31, 31.... Therefore, the sauce and the like will not deposit on the screwed-together portion, and the gas burners 21A and 21B are easily removed to be cleaned. Also, the window hole 37c is formed on the side face of the movable clamping body 37 of the skewer holding tool 20. Therefore, the inside of the movable clamping body 37 is sufficiently cleaned by pouring a cleaning liquid through the window hole 37c.

Moreover, the top end of the skewer holding tool guiding member 41 is covered with the covering member 41a of synthetic resin, and also the pressing roller 45 is formed of a synthetic resin material. Therefore the skewer holding tool 20 is not so worn or do not make so much noise even after a long-term operation.

### Industrial Applicability

The apparatus for grilling skewered food of the present invention can be used for quickly producing in large amounts grilled skewered food such as grilled skewered chickens, grilled skewered giblets and the like prepared by heating pieces of meat, fish, vegetables and the like on a skewer.

### Reference Signs List

- 1: Apparatus for grilling skewered food
- 2: Skewer holding tool conveyance mechanism
- 3, 4: Heating device
- 5: Sauce reservoir
- 6: Control device
- 7: Endless rotating chain
- 8: Drive sprocket
- 11: Base
- 15: Drive shaft
- 17: Key
- 20: Skewer holding tool
- 24: Protective net
- 25A, 25B: Guide
- 34: Supporting member
- 35: Support pin
- 36: Holding tool main body
- 36d: Support pin guiding groove
- 37: Movable clamping body
- 39: Spring
- 40: Releasing pin
- 42: Skewer releasing mechanism
- 49: Skewer holding tool lifting member
- 50: Sauce prevention mechanism
- 51: Skewer holding tool holder
- 52: Solder supporting rod
- 53: Gripping member
- 54: Gripping member supporting rod
- 55: Connecting member
- 56: Spindle
- 59: Skewer holding tool regulating member
- A: Skewer
- B: Food materials
- C: Raw materials of skewered food
- D: Product of grilled skewered food

## Claims

1. An apparatus for grilling skewered food (1) comprising:
a skewer holding tool conveyance mechanism (2) conveying raw materials of skewered food (C) having food materials (B) threaded onto a skewer (A) while the raw materials of skewered food (C) are held in a vertical position by a skewer holding tool (20) mounted onto an endless rotating chain (7);
a heating device (3, 4) heating the raw materials of skewered food (C) from both sides as the raw materials of skewered food (C) are conveyed;
a sauce reservoir (5) storing a sauce in which the raw materials of skewered food (C) are dipped; and
a control device (6) controlling activation, deactivation, and conveyance speed of the skewer holding tool conveyance mechanism (2),
and a skewer holding tool lifting member (49), which is shaped such that the member (49) rotates the skewer holding tool (20) downward at a portion before a center of the sauce reservoir (5) and guides the skewer holding tool (20) and moves the skewer holding tool (20) upward and downward to dip the raw materials of skewered food (C) in the sauce stored in the sauce reservoir (5),
**characterized in that**
the member (49) is divided into a front skewer holding tool lifting member (49A) and a rear skewer holding tool member (49B) being adjustable in position.

2. The apparatus for grilling skewered food (1) according to claim 1, wherein a temperature sensor (26A, 26B) is firmly attached to a heat radiation surface of each gas burner (21A, 21B), and a temperature monitor (34) indicating a temperature from an output of corresponding temperature sensor (26A, 26B) is provided on a front surface of a base (11).

3. The apparatus for grilling skewered food (1) according to claim 1 or 2, wherein a covering member (31) covering a screwed-together portion of each gas burner (21A, 21B) and piping (27) is provided.

4. The apparatus for grilling skewered food (1) according to any one of claims 1 to 3, wherein a window hole (37c) is formed on a side face of a movable clamping body (37) of the skewer holding tool (20).

5. The apparatus for grilling skewered food (1) according to any one of claims 1 to 4, wherein a top end of a skewer holding tool guiding member (41) is covered with a synthetic resin covering member (41a).

6. The apparatus for grilling skewered food (1) according to any one of claims 1 to 5, wherein a pressing roller (45) is formed of a synthetic resin material.

## Patentansprüche

1. Vorrichtung zum Grillen aufgespießter Speise (1), welche aufweist:
einen Spießhaltewerkzeugfördermechanismus (2), der aufgespießte Speiserohmaterialien (C), die auf einen Spieß (A) gesteckte Speisematerialien (B) aufweisen, fördert, während die aufgespießten Speiserohmaterialien (C) von einem an einer endlosen umlaufenden Kette (7) angebrachten Spießhaltewerkzeug (20) in vertikaler Position gehalten werden;
eine Heizvorrichtung (3, 4), die die aufgespießten Speiserohmaterialien (C) von beiden Seiten her heizt, wenn die aufgespießten Speiserohmaterialien (C) gefördert werden;
ein Soßenreservoir (5), das eine Soße speichert, in die die aufgespießten Speiserohmaterialien (C) getaucht werden; und
eine Steuervorrichtung (6), die Aktivierung, Deaktivierung und Fördergeschwindigkeit des Spießhaltewerkzeugfördermechanismus (2) steuert, und
ein Spießhaltewerkzeughubelement (49), das derart geformt ist, dass das Element (49) das Spießhaltewerkzeug (20) an einem Abschnitt vor einer Mitte des Soßenreservoirs (5) nach unten dreht, und das Spießhaltewerkzeug (20) führt und das Spießhaltewerkzeug (20) aufwärts und abwärts bewegt, um die aufgespießten Speiserohmaterialien (C) in die in dem Soßenreservoir (5) gespeicherte Soße zu tauchen,
**dadurch gekennzeichnet, dass** das Element (49) in ein vorderes Spießhaltewerkzeughubelement (49A) und ein hinteres Spießhaltewerkzeugelement (49B), deren Position einstellbar ist, unterteilt ist.

2. Die Vorrichtung zum Grillen aufgespießter Speise (1) nach Anspruch 1, wobei ein Temperatursensor (26A, 26B) an einer Herdheizstrahlungsoberfläche jedes Gasbrenners (21A, 21B) fest angebracht ist, und ein Temperaturmonitor (34), der eine Temperatur aus einer Ausgabe des entsprechenden Temperatursensors (26A, 26B) angibt, an einer Vorderseite einer Basis (11) vorgesehen ist.

3. Die Vorrichtung zum Grillen aufgespießter Speise (1) nach Anspruch 1 oder 2, worin ein Abdeckelement (31), das einen zusammengeschraubten Abschnitt jedes Gasbrenners (21A, 21B) und eine Rohrleitung (27) abdeckt, vorgesehen ist.

4. Die Vorrichtung zum Grillen aufgespießter Speise (1) nach einem der Ansprüche 1 bis 3, wobei ein Fensterloch (37c) an einer Seitenfläche eines beweglichen Klemmkörpers (37) des Spießhaltewerkzeugs (20) ausgebildet ist.

5. Die Vorrichtung zum Grillen aufgespießter Speise (1) nach einem der Ansprüche 1 bis 4, wobei ein oberes Ende eines Spießhaltewerkzeugführungselements (41) mit einem Kunststoffabdeckelement (41a) abgedeckt ist.

6. Die Vorrichtung zum Grillen aufgespießter Speise (1) nach einem der Ansprüche 1 bis 5, wobei eine Presswalze (45) aus Kunststoffmaterial ausgebildet ist.

## Revendications

1. Un appareil pour griller des produits alimentaires en brochette (1), comprenant :
un mécanisme de transport d'outil de support de brochette (2) transportant des matières premières de produits alimentaires en brochette (C) ayant des produits alimentaires (B) enfilés sur une brochette (A) alors que les matières premières de produits alimentaires en brochette (C) sont supportés dans une position verticale par un outil de support de brochette (20) monté sur une chaîne tournante continue (7) ;
un dispositif de chauffage (3, 4) chauffant les matières premières de produits alimentaires en brochette (C) des deux côtés, alors que les matières premières de produits alimentaires en brochette (C) sont transportés ;
un réservoir de sauce (5) stockant une sauce dans laquelle les matières premières de produits alimentaires en brochette (C) sont plongés ; et
un dispositif de contrôle (6) contrôlant l'activation, le désactivation et la vitesse de transport du mécanisme de transport d'outil de support de brochette (2),
et
un membre de levage d'outil de support de brochette (49) qui est formé de sorte que le membre (49) tourne le support de brochette (20) vers le bas à une partie devant un centre du réservoir de sauce (5) et guide l'outil de support de brochette (20) et déplace l'outil de support de brochette (20) vers le haut et vers le bas pour plonger les matières premières de produits alimentaires en brochette (C) dans la sauce stockée dans le réservoir de sauce (5),
**caractérisé en ce que**
le membre (49) est divisé en un membre de levage d'outil de support de brochette devant (49A) et un membre de levage d'outil de support de brochette arrière (49B) réglable en position.

2. L'appareil pour griller des produits alimentaires en brochette (1) selon la revendication 1, où un capteur de température (26A, 26B) est solidement attaché à une surface de radiation de chaleur de chaque bruleur de gaz (21A, 21B), et où un moniteur de température (34) indiquant une température de la sortie d'un capteur de température correspondant (26A, 26B) est prévu sur une surface frontale d'une base (11).

3. L'appareil pour griller des produits alimentaires en brochette (1) selon la revendication 1 ou 2, où un membre de couverture (31) couvrant une partie vissée ensemble de chaque bruleur de gaz (21A, 21B) et des tuyauteries (27) sont prévus.

4. L'appareil pour griller des produits alimentaires en brochette (1) selon une des revendications 1 à 3, où une ouverture de fenêtre (37c) est formée sur une face latérale d'un corps de serrage mobile (37) de l'outil de support de brochette (20).

5. L'appareil pour griller des produits alimentaires en brochette (1) selon une des revendications 1 à 4, où une extrémité supérieure d'un membre de guidage d'outil de support de brochette est couverte par un membre couvrant de résine synthétique (41a).

6. L'appareil pour griller des produits alimentaires en brochette (1) selon une des revendications 1 à 5, où un rouleau de pressage (45) est formé d'un matériau de résine synthétique.
